# EUROPEAN PATENT APPLICATION

(11) **EP 4 668 459 A1**
(43) Date of publication of application: **24.12.2025**
(21) Application number: 23946478.7
(22) Date of filing: 29.11.2023
(51) Int. Cl.: H01M 50/489, H01M 50/491, H01M 10/0587, H01M 10/0525

(54) **ELECTRODE ASSEMBLY, BATTERY, AND ELECTRIC DEVICE**

(30) Priority: 26.07.2023 CN 202310919314
(71) Applicant: Contemporary Amperex Technology Co., Limited, Ningde, Fujian 352100 (CN)
(72) Inventor: CHEN, Heng, Ningde, Fujian 352100 (CN); ZHENG, Hongshuai, Ningde, Fujian 352100 (CN); LIU, Di, Ningde, Fujian 352100 (CN); CHEN, Wei, Ningde, Fujian 352100 (CN)
(74) Representative: Lorenz Seidler Gossel Part. mbB
(86) International application number: PCT/CN2023/135227
(87) International publication number: WO 2025/020400

(57) **Abstract**

The present application relates to the field of battery technologies, and in particular, to an electrode assembly, a battery, and an electric device. The electrode assembly includes a first electrode, a second electrode, a first separator, and a second separator. One of the first separator and the second separator is disposed between the first electrode and the second electrode. The other of the first separator and the second separator is disposed on a side that is of the first electrode or the second electrode and that faces away from the first separator. One of the first separator and the second separator does not include a porous coating. The other of the first separator and the second separator includes a porous coating. The thickness of the porous coating is 0.5 µm to 8 µm. The electrode assembly in the present application includes a specific first separator and a specific second separator, which can effectively improve cycling performance of the battery.

## Description

### CROSS-REFERENCE TO RELATED APPLICATIONS

The present application claims priority to Chinese Patent Application No. 202310919314.0 filed on July 26, 2023, which is incorporated herein by reference in its entirety.

### TECHNICAL FIELD

The present application relates to the field of battery technologies, and in particular, to an electrode assembly, a battery, and an electric device.

### BACKGROUND

Secondary batteries are widely used in various types of consumer electronic products and electric vehicles due to their advantages such as a high energy density, a high output voltage, good safety, no pollution, and no memory effect.

With the increasingly widespread application of the secondary batteries, consumers also have increasing use demands for the secondary batteries. How to make the secondary batteries have good electrochemical performance remains a key challenge in current development of the secondary batteries.

### SUMMARY

A major objective of the present application is to provide an electrode assembly, which is intended to improve cycling performance of a battery.

To achieve the above objective, provided in the present application is an electrode assembly, comprising a first electrode, a second electrode, a first separator, and a second separator.

One of the first separator and the second separator is disposed between the first electrode and the second electrode, the other of the first separator and the second separator is disposed on a side that is of the first electrode or the second electrode and that faces away from the first separator, one of the first separator and the second separator does not comprise a porous coating, the other of the first separator and the second separator comprises a porous coating, and the thickness of the porous coating is 0.5 µm to 8 µm.

It may be understood that one of the first electrode and the second electrode is a positive electrode, and the other thereof is a negative electrode.

It may be understood that positions at which the first separator and the second separator are disposed in the electrode are not limited. This may be set as required. For example, one of the first separator and the second separator is disposed between the first electrode and the second electrode, and the other of the first separator and the second separator is disposed on a side that is of the first electrode or the second electrode and that faces away from the first separator.

One of the first separator and the second separator does not comprise a porous coating, and the other of the first separator and the second separator comprises a porous coating. The thickness of the porous coating is 0.5 µm to 8 µm. For example, the first separator does not comprise a porous coating, and the second separator comprises a porous coating, or the second separator does not comprise a porous coating, and the first separator comprises a porous coating.

It may be understood that, in the present application, designs of the first separator and the second separator are different. Therefore, in a battery cycling process, more expansion space is reserved for a cell, which reduces compression by a housing on the cell in an expansion process, thereby alleviating a phenomenon that an active material is damaged due to a compression force in a compression process, and also alleviating a phenomenon that an electrolyte solution is extruded in the compression process. Therefore, the cell is effectively wetted in the electrolyte solution in the expansion process, which helps transmit ions, and further effectively improves cycling performance of the battery.

Further, the first separator comprises a first porous base film and a porous coating; and/or the second separator comprises a second porous base film.

Specifically, the first separator comprises the first porous base film and the porous coating, and the porous coating may be a structure for playing a bonding function and/or a heat-resistance function. Certainly, the porous coating may be a structure for play other functions. This is not limited in the present application. Performance of the electrode assembly is improved by introducing the porous coating. The second separator comprises the second porous base film. It may be understood that a base film is a basic material of a separator, for example, an organic microporous membrane, meaning that the second separator may not comprise a porous coating.

It may be understood that a position at which the porous coating is disposed in the first separator is not limited, for example, the porous coating may be disposed on at least one side of the first porous base film, or the porous coating is composited on the first porous base film, for example, a material of the porous coating is mixed with a material of the base film, and the composite separator is manufactured through melt co-extrusion.

It may also be understood that positions at which the first separator and the second separator are disposed are not limited in the present application, and may be set based on actual needs. For example, in one case, the first separator is disposed between the first electrode and the second electrode, and the second separator is disposed on a side that is of the first electrode or the second electrode and that faces away from the first separator. **In** another case, the second separator is disposed between the first electrode and the second electrode, and the first separator is disposed on a side that is of the first electrode or the second electrode and that faces away from the first separator.

It may be understood that, when the first separator comprises a porous coating and the second separator does not comprise a porous coating, a preferred solution in the present application is the first case, that is, the first separator comprising a porous coating is disposed between the first electrode and the second electrode. In this case, the porous coating is disposed close to the electrode, so that the porous coating can better protect the electrode and improve performance of the battery.

Optionally, the second separator does not comprise a porous coating, and the second separator is disposed on a side that is of the first electrode or the second electrode and that faces away from the first separator.

It may be understood that, when the first separator comprises a porous coating and the second separator does not comprise a porous coating, a preferred solution in the present application is that the first separator comprising a porous coating is disposed between the first electrode and the second electrode. In this case, the porous coating is disposed close to the electrode, so that the porous coating can better protect the electrode and improve performance of the battery. For example, when the porous coating comprises a binder layer, the binder is directly in contact with the electrode, which helps improve a bonding force between the electrode and the separator.

Optionally, the electrode assembly comprises a wound structure, the wound structure comprises an inner side and an outer side, and the wound structure comprises, from the inner side to the outer side, a negative electrode, a first separator, a positive electrode, and a second separator that are sequentially stacked layer by layer.

It may be understood that, after the electrodes and the separators are sequentially stacked layer by layer, the electrodes and the separators are bent and wound around the winding center, and the electrodes are bent, so that corner portions are formed in the electrode assembly, and a straight portion is formed between two corner portions. In the winding process, a structure in which the electrodes and the separators are stacked layer by layer into concentric circles is formed. The first formed circle is defined as an inner circle, then winding is repeated on an outer surface of the inner circle, and the last formed circle is an outer circle. Space surrounded by the inner circle is defined as the inner side, and a region in which an outer surface of the outer circle is located is defined as the outer side.

It may be understood that, in the electrode assembly of the wound structure, the wound structure comprises the inner side and the outer side, and the wound structure comprises, from the inner side to the outer side, the negative electrode, the first separator, the positive electrode, and the second separator that are sequentially stacked layer by layer. The following problem may exist in the wound structure: Because the negative electrode expands in the cycling process, a gap is formed between the positive electrode and the negative electrode, resulting in an increased corner area of the positive electrode at the corner (it may be understood that the corner refers to the bending portion of the wound structure). This structural characteristic causes the problem of lithium precipitation at the negative electrode in a process of embedding lithium ions (taking a lithium-ion secondary battery as an example) in the positive electrode into the negative electrode. The main problem is that the corner area of the positive electrode is increased. As a result, when an area of the negative electrode is fixed, more lithium ions reach the area of the negative electrode, and the area of the negative electrode is insufficient to accommodate the increased lithium ions, leading to the phenomenon of lithium precipitation at the negative electrode. Therefore, to alleviate the above problem, the first separator is disposed between two electrodes, and the first separator comprises a porous coating. When the porous coating comprises a binder layer, a bonding force between the two electrodes can be improved, thereby alleviating the problem of forming a gap between the two electrodes, and alleviating the phenomenon of lithium precipitation.

Optionally, the thickness of the second porous base film is greater than the thickness of the first porous base film.

The first separator comprises a porous coating, which has the function of reducing the penetration of lithium dendrites (taking a lithium-ion secondary battery as an example) through the first separator, and the second separator does not comprise a porous coating. Therefore, to improve a puncture-resistance function of the second separator, the thickness of the second porous base film is greater than the thickness of the first porous base film, to reduce the risk of the second separator being punctured, and improve the safety of the battery.

When the thickness of the second porous base film is greater than the thickness of the first porous base film, the thickness of the first separator and the thickness of the second separator are not limited, for example, the thickness of the first separator may be greater than the thickness of the second separator, or the thickness of the first separator may be less than the thickness of the second separator, or the thickness of the first separator may be equal to the thickness of the second separator. The design can be made based on a thickness requirement and a function requirement of the electrode assembly. For example, in one case, the thickness of the electrode assembly needs to be reduced, and the risk of the separator being punctured needs to be reduced. **In** this case, the thickness of the first porous base film can be reduced and the porous coating can be provided on the first porous base film when the thickness of the second porous base film is greater than the thickness of the first porous base film. Therefore, the overall thickness of the base film is reduced, thereby helping reduce the thickness of the electrode assembly. Moreover, the thickness of the second porous base film is increased, and the porous coating is provided on the first porous base film, thereby helping improve the strength of the separator.

Certainly, there are also some cases. Considering that the porous coating needs to be provided on the first porous base film, the thickness of the first separator is increased because the porous coating is provided. **In** this case, when the thickness of the first porous base film is the same as the thickness of the second porous base film, the thickness of the first separator is greater than the thickness of the second separator. In some other cases, when the first separator is disposed between the two electrodes, considering that there is a problem that lithium dendrites (taking a lithium-ion secondary battery as an example) are generated between the electrodes to penetrate the first separator, to alleviate the problem, the thickness of the first separator may be greater than the thickness of the second separator. The increase in the thickness may alleviate a risk that the lithium dendrites pierce the first separator, thereby improving safety of the electrode assembly.

Optionally, the porosity of the first porous base film is greater than the porosity of the second porous base film.

Considering that a porous coating needs to be disposed on the first porous base film, and the porosity of the first separator is worse than that of the first porous base film due to disposition of the porous coating, to alleviate the problem of poor air permeability of the first separator and ensure that the first separator has relatively good air permeability, the porosity of the first porous base film is greater than the porosity of the second porous base film.

In addition, when the first separator is disposed between the two electrodes, to facilitate transmission of lithium ions between the two electrodes through the first separator, the porosity of the first porous base film is greater than the porosity of the second porous base film.

Optionally, the air permeability of the first separator is greater than the air permeability of the second separator.

When the first separator is disposed between the two electrodes, to facilitate transmission of lithium ions, the air permeability of the first separator is greater than the air permeability of the second separator.

Optionally, the ratio of the thickness of the first separator to the thickness of the second separator is 1:2 to 18:5. Optionally, the ratio of the thickness of the first separator to the thickness of the second separator is 1:2 to 3:1.

In the present application, after the electrode assembly is compacted, the ratio of the thickness of the first separator to the thickness of the second separator is 1:2 to 18:5, optionally 1:2 to 3:1.

In the present application, the thicknesses of the first separator and the second separator can be comprehensively adjusted to ensure that the overall thickness of the electrode assembly meets the actual needs. For example, when the overall thickness of the first separator and the second separator is unchanged, the thickness of the porous coating in the first separator can be increased, and the thickness of the second separator can be reduced, thereby ensuring that the overall thickness of the separator is unchanged.

For example, considering that the secondary battery requires different expansion space in different application scenarios, the thickness of a bare cell can be adjusted under the same quantity of winding turns by changing the type and thickness of the first porous base film of the first separator, the thickness of the porous coating, the type of the functional material, and the like.

Optionally, the thickness of the first separator is 8 µm to 18 µm;
and/or the thickness of the second separator is 5 µm to 16 µm.

Optionally, the thickness of the first separator is 10 µm to 15 µm;

and/or the thickness of the second separator is 5 µm to 10 µm.

In the present application, the thickness of the first separator and the thickness of the second separator are not limited, for example, the thickness of the first separator is 8 µm to 18 µm, optionally 10 µm to 15 µm, and the thickness of the second separator is 5 µm to 16 µm, optionally 5 µm to 10 µm.

In some cases, when the first separator comprises a porous coating and the second separator does not comprise a porous coating, and the first porous base film and the second porous base film have the same thickness, because the first separator comprises the first porous base film and the porous coating, and the porous coating has a thickness, the thickness of the first separator may be greater than that of the second separator. Certainly, in other cases, when the thickness of the first porous base film is less than that of the second porous base film, the porous coating is disposed on the first porous base film, so that the first separator and the second separator have the same thickness. This may be set by those skilled in the art based on actual needs.

Optionally, the thickness of the porous coating is 1 µm to 5 µm.

The thickness of the porous coating is not limited in the present application, for example, the thickness of the porous coating is 0.5 µm to 8 µm, optionally 1 µm to 5 µm. This may be set by those skilled in the art as required.

Optionally, the air permeability of the first separator is 80s/100 cc to 250s/100 cc;
and/or the air permeability of the second separator is 110s/100 cc to 310s/100 cc.

Optionally, the air permeability of the first separator is 110s/100 cc to 210s/100 cc;
and/or the air permeability of the second separator is 210s/100 cc to 310s/100 cc.

In the present application, the air permeabilities of the first separator and the second separator are not limited, for example, the air permeability of the first separator is 80s/100 cc to 250s/100 cc, optionally 110s/100 cc to 210s/100 cc, and the air permeability of the second separator is 110s/100 cc to 310s/100 cc, optionally 210s/100 cc to 310s/100 cc.

When the air permeability of the first separator falls within the above range, transmission of ions through the first separator can be improved, and when the air permeability of the second separator falls within the above range, transmission of ions through the second separator can be improved.

Optionally, the porous coating is disposed on at least one side of the first porous base film;
and/or the porous coating comprises at least one of a binder and an inorganic material.

In the first separator, the porous coating is disposed on at least one side of the first porous base film, so that the porous coating is closer to the electrode to effectively play a role of the porous coating. For example, when the porous coating comprises a binder, the binder is directly in contact with the electrode, which helps improve a bonding force between the electrode and the separator.

In the cycling process, expansion, heat generation, and gas generation occur in the electrode assembly, and even dendrites occur in some cases. Therefore, to solve the above problem, the porous coating may comprise a binder and/or an inorganic material, the binder may enhance a bonding force between the separator and each of the first electrode and/or the second electrode, and the inorganic material may enhance heat resistance and mechanical performance of the separator. Certainly, in addition to the binder and/or the inorganic material, the porous coating may comprise other functional materials, such as a lithium supplement agent (for a lithium-ion secondary battery, the type of the secondary battery is not limited in the present application). This may be set as required.

It may be understood that the present application does not limit the particle size of the inorganic material, for example, in an embodiment, the Dv50 of the inorganic material is 0.5 µm to 2 µm.

In addition, a manner in which the binder and the inorganic material are disposed in the porous coating is not limited. For example, the porous coating may comprise the binder or the inorganic material alone, the porous coating may comprise both of the two materials, or the binder and the inorganic material may be directly mixed and disposed in one layer structure, or the binder and the inorganic material may be separately disposed in different layered structures, or the inorganic material may be directly disposed in the first porous base film (for example, a composite film is manufactured by using a co-extrusion apparatus after the material of the base film is mixed with the inorganic material). A specific manner is not limited and may be set as required.

Optionally, the porous coating comprises at least one of a binder layer and a heat-resistant layer.

The binder layer mainly plays a role of bonding, and is used to fasten the two electrodes or fasten the electrode and the separator. In addition, substances such as the inorganic material may be added to the binder layer to improve comprehensive performance of the binder layer. This may be set as required.

The heat-resistant layer mainly plays a role of providing heat resistance for the separator to alleviate the problem of heat shrinkage of the separator after being heated. For example, the heat-resistant layer comprises an inorganic material, and the inorganic material can improve heat resistance, oxidation resistance, puncture resistance, and wettability of the separator, which helps improve safety of the battery. Other functional materials may be added to the heat-resistant layer. This may be set as required.

Optionally, at least one side of the first porous base film is provided with a binder layer.

To improve interfacial bonding between the separator and the electrode so as to improve hardness of the cell and alleviate deformation of the cell, at least one side of the first porous base film is provided with a binder layer. It may be understood that the binder layer may be provided on one side of the first porous base film, or the binder layer may be provided on both sides of the first porous base film. This may be set as required.

Optionally, a heat-resistant layer is disposed between the first porous base film and the binder layer.

To improve heat resistance of the base film, a heat-resistant layer is provided between the first porous base film and the binder layer, the heat-resistant layer may comprise an inorganic material, and the inorganic material may enhance heat resistance, oxidation resistance, puncture resistance, and wettability of the separator, which helps improve safety of the battery. It may be understood that, when one side of the first porous base film is provided with a binder layer, the heat-resistant layer may be disposed between the first porous base film on the one side and the binder layer. Certainly, the heat-resistant layer may be disposed on the other side of the first porous base film. Certainly, when both sides of the first porous base film are not provided with a binder layer, the heat-resistant layer may be disposed on both sides or one side of the first porous base film. This may be set based on specific needs.

It may be understood that, when the first porous base film is provided with both the binder layer and the heat-resistant layer, an interfacial bonding force between the electrode and the separator can be increased, a risk of wrinkling of the electrode can be reduced, and good functions such as heat resistance, oxidation resistance, and puncture resistance of the first separator can be provided.

Optionally, the thickness of the binder layer is 0.5 µm to 5 µm;
and/or the thickness of the heat-resistant layer is 0 µm to 3 µm.

Optionally, the thickness of the binder layer is 1 µm to 3 µm;
and/or the thickness of the heat-resistant layer is 1 µm to 2 µm.

In the present application, the porous coating may comprise a binder layer, and the binder layer may improve a bonding force between the electrode and the separator. The thickness of the binder layer is not limited in the present application, for example, the thickness of the binder layer may be 0.5 µm to 5 µm, optionally 1 µm to 3 µm.

In the present application, the porous coating may comprise a heat-resistant layer, the heat-resistant layer may comprise an inorganic material, and the inorganic material may enhance heat resistance, oxidation resistance, puncture resistance, and wettability of the separator, which helps improve safety of the battery. The thickness of the heat-resistant layer is not limited in the present application, for example, 0 µm to 3 µm, optionally 1 µm to 2 µm.

Optionally, the binder layer comprises a layered coating, and the layered coating is disposed on the first separator;
or the binder layer comprises a dotted coating, and the dotted coating is disposed on the first separator at intervals.

The layered coating means that the binder is continuously coated on a surface of the first porous base film.

The dotted coating means that the binder is discontinuously disposed on the surface of the first porous base film.

Further, the dotted coating is disposed on the first porous base film at intervals, so that good air permeability of the first separator can be ensured, thereby helping transmit ions. Further, the dotted coating has a larger contact area with the electrolyte solution and is easily swollen by the electrolyte solution. The volume of the dotted coating increases after swelling, which can increase the contact area of the dotted coating with the electrode, and improve bonding between the electrode and the separator. The electrolyte solution can be stored in the pores of the dotted coating after swelling, thereby improving wettability of the first separator to the electrolyte solution, and improving transmission of ions.

Optionally, the coverage area of the dotted coating is 50% to 90% of the surface area of the first separator.

Optionally, the coverage area of the dotted coating is 60% to 80% of the surface area of the first separator.

For example, the area of one side of the first separator is S, and the sum of the coating areas of the dotted coatings on one side of the first separator is s1. In this case, the ratio of the coverage area of the dotted coating to the surface area of the first separator is s1/S, and a range of s1/S is 50% to 90%, optionally 60% to 80%.

When the ratio of the coverage area of the dotted coating to the surface area of the first separator falls within the above range, bonding of the binder layer can be improved.

Optionally, the binder layer comprises a binder, and the mass percentage of the binder to the total mass of the binder layer is 80% to 95%, optionally 85% to 90%;
and/or the heat-resistant layer comprises an inorganic material, and the mass percentage of the inorganic material to the total mass of the heat-resistant layer is 60% to 80%, optionally 67% to 75%.

In the present application, the mass percentage of the binder to the total mass of the binder layer is 80% to 95%, optionally 85% to 90%. The heat-resistant layer comprises an inorganic material, and the mass percentage of the inorganic material to the total mass of the heat-resistant layer is 60% to 80%, optionally 67% to 75%. When the mass percentage of the mass of the binder to the total mass of the binder layer falls within the above range, bonding of the binder layer can be improved. When the mass percentage of the inorganic material to the total mass of the heat-resistant layer falls within the above range, heat resistance of the heat-resistant layer can be improved, and heat resistance and mechanical performance of the first separator can be further improved.

Optionally, the binder comprises at least one of a vinylidene fluoride-hexafluoropropylene copolymer, a vinylidene fluoride-trichloroethylene copolymer, a polyacrylate, a polyacrylic acid, a polyacrylate salt, a polyacrylonitrile, a polyvinylpyrrolidone, a polyvinyl acetate, an ethylene-vinyl acetate copolymer, a polyimide, a polyethylene oxide, a cellulose acetate, a cellulose acetate butyrate, a cellulose acetate propionate, a cyanoethyl amylopectin, a cyanoethyl polyvinyl alcohol, a cyanoethyl cellulose, cyanoethyl sucrose, an amylopectin, a carboxymethyl cellulose, a sodium carboxymethyl cellulose, a lithium carboxymethyl cellulose, an acrylonitrile-styrene-butadiene copolymer, a polyvinyl alcohol, a styrene-butadiene copolymer, and a polyvinylidene fluoride;
and/or the inorganic material comprises at least one of silicon dioxide, aluminum oxide, titanium oxide, zinc oxide, magnesium oxide, hafnium oxide, tin oxide, zirconium oxide, yttrium oxide, silicon carbide, boehmite, magnesium hydroxide, aluminum hydroxide, calcium titanate, barium titanate, lithium phosphate, lithium titanium phosphate, and lithium lanthanum titanate.

**In** the present application, the binder comprises but is not limited to at least one of a vinylidene fluoride-hexafluoropropylene copolymer, a vinylidene fluoride-trichloroethylene copolymer, a polyacrylate, a polyacrylic acid, a polyacrylate salt, a polyacrylonitrile, a polyvinylpyrrolidone, a polyvinyl acetate, an ethylene-vinyl acetate copolymer, a polyimide, a polyethylene oxide, a cellulose acetate, a cellulose acetate butyrate, a cellulose acetate propionate, a cyanoethyl amylopectin, a cyanoethyl polyvinyl alcohol, a cyanoethyl cellulose, cyanoethyl sucrose, an amylopectin, a carboxymethyl cellulose, a sodium carboxymethyl cellulose, a lithium carboxymethyl cellulose, an acrylonitrile-styrene-butadiene copolymer, a polyvinyl alcohol, a styrene-butadiene copolymer, and a polyvinylidene fluoride.

In the present application, the inorganic material comprises but is not limited to at least one of silicon dioxide, aluminum oxide, titanium oxide, zinc oxide, magnesium oxide, hafnium oxide, tin oxide, zirconium oxide, yttrium oxide, silicon carbide, boehmite, magnesium hydroxide, aluminum hydroxide, calcium titanate, barium titanate, lithium phosphate, lithium titanium phosphate, and lithium lanthanum titanate.

It may be understood that the lithium titanium phosphate and the lithium lanthanum titanate are solid electrolytes, and the solid electrolyte material can react with metal lithium (taking a lithium-ion secondary battery as an example, the type of the battery is not limited in the present application) to absorb lithium dendrites, thereby preventing the lithium dendrites from penetrating the separator. That is, the solid electrolyte may be added to the heat-resistant layer, and the solid electrolyte comprises but is not limited to at least one of lithium aluminum titanium phosphate, lithium titanium phosphate, lithium tetrathiophosphate, lithium germanium phosphorus sulfide, and lithium phosphorus sulfide chloride. Further, the solid electrolyte has specific ion conductivity and low electron conductivity. When used as an electrolyte material, the solid electrolyte has good ion conductivity and electron insulation. Therefore, when used as a separator coating, the solid electrolyte does not greatly increase the impedance of the separator, and inhibit transfer of electrons through the separator.

Further provided in the present application is a battery, comprising the electrode assembly described above.

Further provided in the present application is an electric device, comprising the battery described above.

**In** the present application, the electrode assembly comprises a first electrode, a second electrode, a first separator, and a second separator. One of the first separator and the second separator is disposed between the first electrode and the second electrode. The other of the first separator and the second separator is disposed on a side that is of the first electrode or the second electrode and that faces away from the first separator. One of the first separator and the second separator does not comprise a porous coating. The other of the first separator and the second separator comprises a porous coating. The thickness of the porous coating is 0.5 µm to 8 µm. In the present application, designs of the first separator and the second separator are different. Therefore, in a battery cycling process, more expansion space is reserved for a cell, which reduces compression by a housing on the cell in an expansion process, thereby alleviating a phenomenon that an active material is damaged due to a compression force in a compression process, and also alleviating a phenomenon that an electrolyte solution is extruded in the compression process. Therefore, the cell is effectively wetted in the electrolyte solution in the expansion process, which helps transmit ions, and further effectively improves cycling performance of the battery.

### DESCRIPTION OF DRAWINGS

To describe technical solutions in embodiments of the present application or in the conventional technology more clearly, the following briefly describes the accompanying drawings for describing the embodiments or the conventional technology. It is clear that the accompanying drawings described in the following are merely some embodiments of the present application. Those of ordinary skill in the art can still derive other accompanying drawings from the structures shown by these accompanying drawings without creative efforts.
FIG. 1 is a schematic diagram of a structure of an embodiment of an electrode assembly according to the present application;
FIG. 2 is a schematic diagram of a structure of another embodiment of an electrode assembly according to the present application;
FIG. 3 is a schematic diagram of a structure of still another embodiment of an electrode assembly according to the present application;
FIG. 4 is a schematic diagram of a structure of an embodiment of a first separator according to the present application;
FIG. 5 is a schematic diagram of a structure of another embodiment of a first separator according to the present application;
FIG. 6 is a schematic diagram of a battery cell provided according to an embodiment of the present application;
FIG. 7 is an exploded view of the battery cell shown in FIG. 6 according to an embodiment of the present application;
FIG. 8 is a schematic diagram of a battery module according to an embodiment of the present application;
FIG. 9 is a schematic diagram of a battery pack according to an embodiment of the present application;
FIG. 10 is an exploded view of the battery pack shown in FIG. 9 according to an embodiment of the present application; and
FIG. 11 is a schematic diagram of an electric apparatus in which a battery cell is used as a power supply according to an embodiment of the present application.

### Description of reference numerals:

| Reference numeral | Name | Reference numeral | Name |
|---|---|---|---|
| 1000 | Electrode assembly | 300 | Second separator |
| 100 | First separator | 20 | First electrode |
| 10 | First porous base film | 40 | Second electrode |
| 11 | Binder layer | 22 | Negative electrode |
| 12 | Heat-resistant layer | 24 | Positive electrode |
| 14 | Separator | 15 | Electrode |
| 60 | Inner circle | 70 | Outer circle |
| 61 | Inner side | 71 | Outer side |
| 80 | Corner portion | 90 | Straight portion |
| 50 | Winding center | 5 | Battery cell |
| 1 | Battery pack | 51 | Housing |
| 2 | Upper case | 52 | Electrode assembly |
| 3 | Lower case | 53 | Cover plate |
| 4 | Battery module | | |

Purpose implementation, functional features, and advantages of the present application are further described with reference to the embodiments and the accompanying drawings.

### DESCRIPTION OF EMBODIMENTS

The following clearly and completely describes the technical solutions in the embodiments of the present application with reference to the accompanying drawings in the embodiments of the present application. Apparently, the described embodiments are merely some but not all of the embodiments of the present application. All other embodiments obtained by a person of ordinary skill in the art based on the embodiments of the present application without making creative efforts shall fall within the protection scope of the present application.

With appropriate reference to the accompanying drawings, the following describes in detail implementations that specifically disclose an electrode assembly, a battery, and an electric apparatus according to the present application. However, an unnecessary detailed description may be omitted. For example, a detailed description of well-known matters and repeated descriptions of a substantially same structure may be omitted. This is to avoid the following descriptions from becoming unnecessarily redundant and to facilitate understanding by those skilled in the art. The accompanying drawings and the following descriptions are provided for those skilled in the art to fully understand the present application, and are not intended to limit the subject matter described in the claims.

The "range" disclosed in the present application is limited in the form of a lower limit and an upper limit. A given range is limited by selecting a lower limit and an upper limit, which define the boundaries of the specific range. A range defined in this manner may include an end value or may not include an end value, and may be any combination, that is, any lower limit may be combined with any upper limit to form a range. For example, if the ranges of 60-120 and 80-110 are listed for a specific parameter, it is understood that the ranges of 60-110 and 80-120 are also expected. In addition, if the minimum range values of 1 and 2 are listed, and if the maximum range values of 3, 4, and 5 are listed, the following ranges may all be expected: 1-3, 1-4, 1-5, 2-3, 2-4, and 2-5. In the present application, unless otherwise stated, a numerical range "a-b" represents a shorthand representation for a combination of any real numbers between a and b, where both a and b are real numbers. For example, the numerical range of "0-5" represents that all real numbers between "0-5" have been listed herein, and "0-5" is only a shortened representation of these numerical combinations. In addition, when a parameter is expressed as an integer ≥ 2, it is equivalent to disclosing that the parameter is an integer such as 2, 3, 4, 5, 6, 7, 8, 9, 10, 11, or 12.

Unless otherwise specified, all implementations and optional implementations of the present application may be combined with each other to form new technical solutions.

Unless otherwise specified, all technical features and optional technical features of the present application can be combined with each other to form new technical solutions.

Unless otherwise specified, all steps in the present application may be performed sequentially or randomly, preferably sequentially. For example, the method includes steps (a) and (b), which indicates that the method may include sequentially performed steps (a) and (b) or may include sequentially performed steps (b) and (a). For example, the mentioned method may further include step (c), which indicates that step (c) may be added to the method in any order, for example, the method may include steps (a), (b), and (c), may include steps (a), (c), and (b), may include steps (c), (a) and (b), or the like.

In the related art, a secondary battery such as a lithium-ion secondary battery or a sodium-ion secondary battery is manufactured by accommodating an electrode assembly and an electrolyte in a housing, where the electrode assembly includes a positive electrode, a negative electrode, and a separator disposed between the positive electrode and the negative electrode.

Secondary batteries are widely used in various types of consumer electronic products and electric vehicles mainly due to their advantages such as a high energy density, a high output voltage, good safety, no pollution, and no memory effect.

With the increasingly widespread application of the secondary batteries, consumers also have increasing use demands for the secondary batteries. How to make the secondary batteries have good electrochemical performance remains a key challenge in current development of the secondary batteries.

To solve the above technical problem, provided in the present application is an electrode assembly, which is intended to improve cycling performance of a battery.

The electrode assembly includes a first electrode, a second electrode, a first separator, and a second separator. One of the first separator and the second separator is disposed between the first electrode and the second electrode. The other of the first separator and the second separator is disposed on a side that is of the first electrode or the second electrode and that faces away from the first separator. One of the first separator and the second separator does not include a porous coating. The other of the first separator and the second separator includes a porous coating. The thickness of the porous coating is 0.5 µm to 8 µm.

It may be understood that one of the first electrode and the second electrode is a positive electrode, and the other thereof is a negative electrode.

It may be understood that positions at which the first separator and the second separator are disposed in the electrode are also not limited. This may be set as required. For example, one of the first separator and the second separator is disposed between the first electrode and the second electrode, and the other of the first separator and the second separator is disposed on a side that is of the first electrode or the second electrode and that faces away from the first separator.

One of the first separator and the second separator does not include a porous coating, and the other of the first separator and the second separator includes a porous coating. The thickness of the porous coating is 0.5 µm to 8 µm. For example, the first separator does not include a porous coating, and the second separator includes a porous coating, or the second separator does not include a porous coating, and the first separator includes a porous coating.

It may be understood that, in the present application, designs of the first separator and the second separator are different. Therefore, in a battery cycling process, more expansion space is reserved for a cell, which reduces compression by a housing on the cell in an expansion process, thereby alleviating a phenomenon that an active material is damaged due to a compression force in a compression process, and also alleviating a phenomenon that an electrolyte solution is extruded in the compression process. Therefore, the cell is effectively wetted in the electrolyte solution in the expansion process, which helps transmit ions, and further effectively improves cycling performance of the battery.

In the above 0.5 µm to 8 µm, a value includes a minimum value and a maximum value of the range and each value between the minimum value and the maximum value. A specific example includes but is not limited to point values in this embodiment such as 0.5 µm, 1 µm, 3 µm, 5 µm, 7 µm, or 8 µm, and a range value between any two of the above point values.

In an embodiment, the first separator includes a first porous base film and a porous coating; and/or the second separator includes a second porous base film.

It may be understood that the materials of the first porous base film and the second porous base film may be the same or different, and the thicknesses of the first porous base film and the second porous base film may be the same or different. This is set as required.

Specifically, in the present application, the first separator and the second separator are included, the first separator includes the first porous base film and the porous coating, and the porous coating may be a structure for playing a bonding function or a heat-resistance function. Certainly, the porous coating may be a structure for play other functions. This is not limited in the present application. Performance of the electrode assembly is improved by introducing the porous coating. The second separator includes the second porous base film. It may be understood that a base film is a basic material of a separator, for example, an organic microporous membrane, meaning that the second separator may not include a porous coating.

It may be understood that a position at which the porous coating is disposed in the first separator is not limited, for example, the porous coating may be disposed on at least one side of the first porous base film, or the porous coating is composited on the first porous base film, for example, a material of the porous coating is mixed with a material of the base film, and the composite separator is manufactured through melt co-extrusion.

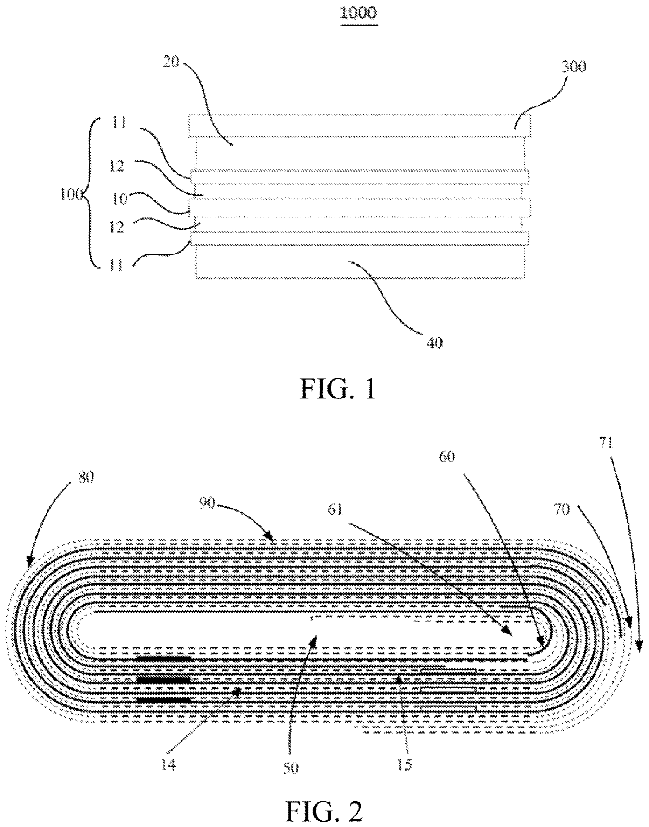

It may also be understood that positions at which the first separator 100 and the second separator 300 are disposed are not limited in the present application, and may be set based on actual needs. For example, as shown in FIG. 1, which is a schematic diagram of a structure of an electrode assembly 1000, in one case, the first separator 100 is disposed between the first electrode 20 and the second electrode 40, and the second separator 300 is disposed on a side that is of the first electrode 20 or the second electrode 40 and that faces away from the first separator. In another case, the second separator is disposed between the first electrode and the second electrode, and the first separator is disposed on a side that is of the first electrode or the second electrode and that faces away from the first separator.

It may be understood that, when the first separator includes a porous coating and the second separator does not include a porous coating, a preferred solution in the present application is the first case, that is, the first separator including a porous coating is disposed between the first electrode and the second electrode. In this case, the porous coating is disposed close to the electrode, so that the porous coating can better protect the electrode and improve performance of the battery.

In an embodiment, the second separator does not include a porous coating, and the second separator is disposed on a side that is of the first electrode or the second electrode and that faces away from the first separator.

It may be understood that, when the first separator includes a porous coating and the second separator does not include a porous coating, a preferred solution in the present application is that the first separator including a porous coating is disposed between the first electrode and the second electrode. In this case, the porous coating is disposed close to the electrode, so that the porous coating can better protect the electrode and improve performance of the battery. For example, when the porous coating includes a binder layer, the binder is directly in contact with the electrode, which helps improve a bonding force between the electrode and the separator.

In an embodiment, the electrode assembly includes a wound structure, the wound structure includes an inner side and an outer side, and the wound structure includes, from the inner side to the outer side, a negative electrode, a first separator, a positive electrode, and a second separator that are sequentially stacked layer by layer.

For the inner side and the outer side, refer to FIG. 2. After the electrodes 15 and the separators 14 are sequentially stacked layer by layer, the electrodes 15 and the separators 14 are bent and wound around the winding center 50, and the electrodes are bent, so that corner portions 80 are formed in the electrode assembly, and a straight portion 90 is formed between two corner portions 80. In the winding process, a structure in which the electrodes and the separators are stacked layer by layer into concentric circles is formed. The first formed circle is defined as an inner circle 60, then winding is repeated on an outer surface of the inner circle 60, and the last formed circle is an outer circle 70. Space surrounded by the inner circle 60 is defined as the inner side 61, and a region in which an outer surface of the outer circle 70 is located is defined as the outer side 71.

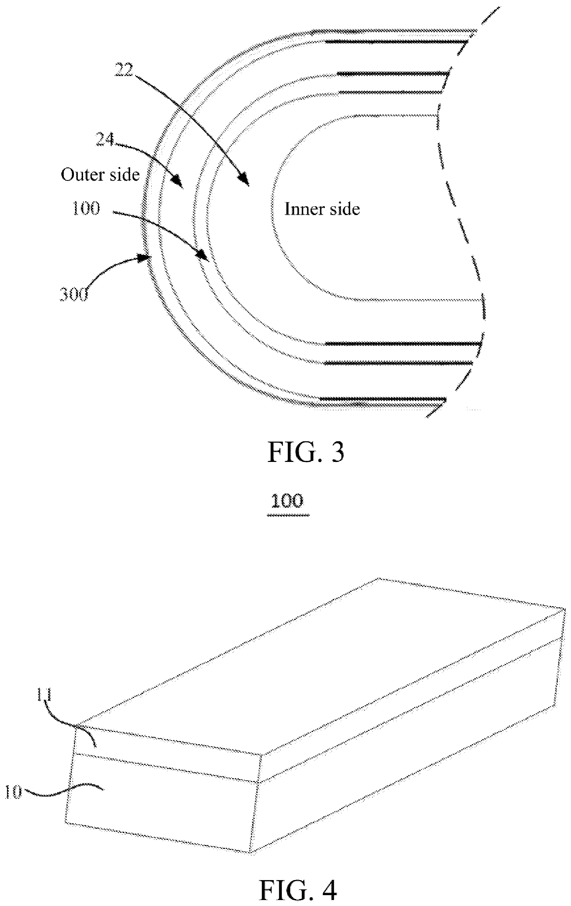

It may be understood that, in the electrode assembly of the wound structure, the wound structure includes the inner side and the outer side. For example, FIG. 3 is a schematic diagram of a wound structure, and the wound structure includes, from the inner side to the outer side, the negative electrode 22, the first separator 100, the positive electrode 24, and the second separator 300 that are sequentially stacked layer by layer. The following problem may exist in the wound structure: Because the negative electrode expands in the cycling process, a gap is formed between the positive electrode and the negative electrode, resulting in an increased corner area of the positive electrode at the corner (it may be understood that the corner refers to the bending portion of the wound structure). This structural characteristic causes the problem of lithium precipitation at the negative electrode in a process of embedding lithium ions (taking a lithium-ion secondary battery as an example) in the positive electrode into the negative electrode. The main problem is that the corner area of the positive electrode is increased. As a result, when an area of the negative electrode is fixed, more lithium ions reach the area of the negative electrode, and the area of the negative electrode is insufficient to accommodate the increased lithium ions, leading to the phenomenon of lithium precipitation at the negative electrode. Therefore, to alleviate the above problem, the first separator is disposed between two electrodes, and the first separator includes a porous coating. When the porous coating includes a binder layer, a bonding force between the two electrodes can be improved, thereby alleviating the problem of forming a gap between the two electrodes, and alleviating the phenomenon of lithium precipitation.

In an embodiment, the thickness of the second porous base film is greater than the thickness of the first porous base film.

The first separator includes a porous coating, for example, when the porous coating includes an inorganic material, the porous coating has the function of reducing the penetration of lithium dendrites (taking a lithium-ion secondary battery as an example) through the first separator, and the second separator does not include a porous coating. Therefore, to improve a puncture-resistance function of the second separator, the thickness of the second porous base film is greater than the thickness of the first porous base film, to reduce the risk of the second separator being punctured, and improve the safety of the battery.

When the thickness of the second porous base film is greater than the thickness of the first porous base film, the thickness of the first separator and the thickness of the second separator are not limited, for example, the thickness of the first separator may be greater than the thickness of the second separator, or the thickness of the first separator may be less than the thickness of the second separator, or the thickness of the first separator may be equal to the thickness of the second separator. The design can be made based on a thickness requirement and a function requirement of the electrode assembly. For example, in one case, the thickness of the electrode assembly needs to be reduced, and the risk of the separator being punctured needs to be reduced. In this case, the thickness of the first porous base film can be reduced and the porous coating can be provided on the first porous base film when the thickness of the second porous base film is greater than the thickness of the first porous base film. Therefore, the overall thickness of the base film is reduced, thereby helping reduce the thickness of the electrode assembly. Moreover, the thickness of the second porous base film is increased, and the porous coating is provided on the first porous base film, thereby helping improve the strength of the separator.

Certainly, there are also some cases. Considering that the porous coating needs to be provided on the first porous base film, the thickness of the first separator is increased because the porous coating is provided. **In** this case, when the thickness of the first porous base film is the same as the thickness of the second porous base film, the thickness of the first separator is greater than the thickness of the second separator. **In** some other cases, when the first separator is disposed between the two electrodes, considering that there is a problem that lithium dendrites (taking a lithium-ion secondary battery as an example) are generated between the electrodes to penetrate the first separator, to alleviate the problem, the thickness of the first separator may be greater than the thickness of the second separator. The increase in the thickness may alleviate a risk that the lithium dendrites pierce the first separator, thereby improving safety of the electrode assembly.

In an embodiment, the porosity of the first porous base film is greater than the porosity of the second porous base film.

Considering that a porous coating needs to be disposed on the first porous base film, and the porosity of the first separator is worse than that of the first porous base film due to disposition of the porous coating, to alleviate the problem of poor air permeability of the first separator and ensure that the first separator has relatively good air permeability, the porosity of the first porous base film is greater than the porosity of the second porous base film.

In addition, when the first separator is disposed between the two electrodes, to facilitate transmission of lithium ions between the two electrodes through the first separator, the porosity of the first porous base film is greater than the porosity of the second porous base film.

In an embodiment, the air permeability of the first separator is greater than the air permeability of the second separator.

When the first separator is disposed between the two electrodes, to facilitate transmission of lithium ions, the air permeability of the first separator is greater than the air permeability of the second separator.

In the first separator, the porous coating is disposed on at least one side of the first porous base film, so that the porous coating is closer to the electrode to effectively play a role of the porous coating. For example, when the porous coating includes a binder, the binder is directly in contact with the electrode, which helps improve a bonding force between the electrode and the separator.

In an embodiment, the porous coating is disposed on at least one side of the first porous base film; and/or the porous coating includes at least one of a binder and an inorganic material.

In the first separator, the porous coating is disposed on at least one side of the first porous base film, so that the porous coating is closer to the electrode to effectively play a role of the porous coating. For example, when the porous coating includes a binder, the binder is directly in contact with the electrode, which helps improve a bonding force between the electrode and the separator.

In the cycling process, expansion, heat generation, and gas generation occur in the electrode assembly, and even dendrites occur in some cases. Therefore, to alleviate the above problem, the porous coating may include a binder and/or an inorganic material, the binder may enhance a bonding force between the separator and each of the first electrode and/or the second electrode, and the inorganic material may enhance heat resistance and mechanical performance of the separator. Certainly, in addition to the binder and/or the inorganic material, the porous coating may include other functional materials, such as a lithium supplement agent (for a lithium-ion secondary battery, the type of the secondary battery is not limited in the present application). This may be set as required.

It may be understood that the present application does not limit the particle size of the inorganic material, for example, in an embodiment, the Dv50 of the inorganic material is 0.5 µm to 2 µm.

In addition, a manner in which the binder and the inorganic material are disposed in the porous coating is not limited. For example, the porous coating may include the binder or the inorganic material alone, the porous coating may include both of the two materials, or the binder and the inorganic material may be directly mixed and disposed in one layer structure, or the binder and the inorganic material may be separately disposed in different layered structures, or the inorganic material may be directly disposed in the first porous base film (for example, a composite film is manufactured by using a co-extrusion apparatus after the material of the base film is mixed with the inorganic material). A specific manner is not limited and may be set as required.

In an embodiment, the porous coating includes at least one of a binder layer and a heat-resistant layer.

The binder layer mainly plays a role of bonding, and is used to fasten the two electrodes or fasten the electrode and the separator. In addition, substances such as the inorganic material may be added to the binder layer to improve comprehensive performance of the binder layer. This may be set as required.

The heat-resistant layer mainly plays a role of providing heat resistance for the separator to solve the problem of heat shrinkage of the separator after being heated. For example, the heat-resistant layer includes an inorganic material, and the inorganic material can improve heat resistance, oxidation resistance, puncture resistance, and wettability of the separator, which helps improve safety of the battery. Other functional materials may be added to the heat-resistant layer. This may be set as required.

In an embodiment, at least one side of the first porous base film is provided with a binder layer.

To improve interfacial bonding between the separator and the electrode so as to improve hardness of the cell and alleviate deformation of the cell, at least one side of the first porous base film is provided with a binder layer. It may be understood that the binder layer may be provided on one side of the first porous base film, or the binder layer may be provided on both sides of the first porous base film. This may be set as required.

In an embodiment, a heat-resistant layer is disposed between the first porous base film and the binder layer.

To improve heat resistance of the base film, a heat-resistant layer is provided between the first porous base film and the binder layer, the heat-resistant layer may include an inorganic material, and the inorganic material may enhance heat resistance, oxidation resistance, puncture resistance, and wettability of the separator, which helps improve safety of the battery. It may be understood that, when one side of the first porous base film is provided with a binder layer, the heat-resistant layer may be disposed between the first porous base film on the one side and the binder layer. Certainly, the heat-resistant layer may be disposed on the other side of the first porous base film. Certainly, when both sides of the first porous base film are not provided with a binder layer, the heat-resistant layer may be disposed on both sides or one side of the first porous base film. This may be set based on specific needs.

It may be understood that, when the first porous base film is provided with both the binder layer and the heat-resistant layer, an interfacial bonding force between the electrode and the separator can be increased, a risk of wrinkling of the electrode can be reduced, and good functions such as heat resistance, oxidation resistance, and puncture resistance of the first separator can be provided.

For example, in an embodiment, as shown in the first separator 100 in FIG. 1, the binder layer 11 is disposed on each of two sides of the first porous base film 10, and the heat-resistant layer 12 is disposed between the first porous base film 10 and the binder layer 11, to form the composite first separator 100. The separator includes both the binder layer and the heat-resistant layer. In addition, the first separator is disposed between the two electrodes, and the first separator separates the positive electrode and the negative electrode, which facilitates shaping of the electrode assembly and release of corner stress, and suppresses deformation of the electrochemical apparatus.

In an embodiment, the ratio of the thickness of the first separator to the thickness of the second separator is 1:2 to 18:5, optionally 1:2 to 3:1.

In the present application, after the electrode assembly is compacted, the ratio of the thickness of the first separator to the thickness of the second separator is 1:2 to 18:5, optionally 1:2 to 3:1.

In the present application, the thicknesses of the first separator and the second separator can be comprehensively adjusted to ensure that the overall thickness of the electrode assembly meets the actual needs. For example, when the overall thickness of the first separator and the second separator is unchanged, the thickness of the porous coating in the first separator can be increased, and the thickness of the second separator can be reduced, thereby ensuring that the overall thickness of the separator is unchanged.

For example, considering that the secondary battery requires different expansion space in different application scenarios, the thickness of a bare cell can be adjusted under the same quantity of winding turns by changing the type and thickness of the first porous base film of the first separator, the thickness of the porous coating, the type of the functional material, and the like.

In the above 1:2 to 18:5, a value includes a minimum value and a maximum value of the range and each value between the minimum value and the maximum value. A specific example includes but is not limited to point values in this embodiment such as 1:2, 1:1, 2.5:1, 3:1, 3.5:1, or 18:5, and a range value between any two of the above point values.

In an embodiment, the thickness of the first separator is 8 µm to 18 µm, optionally 10 µm to 15 µm; and/or the thickness of the second separator is 5 µm to 16 µm, optionally 5 µm to 10 µm.

In the present application, the thickness of the first separator and the thickness of the second separator are not limited, for example, the thickness of the first separator is 8 µm to 18 µm, optionally 10 µm to 15 µm, and the thickness of the second separator is 5 µm to 16 µm, optionally 5 µm to 10 µm.

In some cases, when the first separator includes a porous coating and the second separator does not include a porous coating, and the first porous base film and the second porous base film have the same thickness, because the first separator includes the first porous base film and the porous coating, and the porous coating has a thickness, the thickness of the first separator may be greater than that of the second separator. Certainly, in other cases, when the thickness of the first porous base film is less than that of the second porous base film, the porous coating is disposed on the first porous base film, so that the first separator and the second separator have the same thickness. This may be set by those skilled in the art based on actual needs.

In the above 8 µm to 18 µm, a value includes a minimum value and a maximum value of the range and each value between the minimum value and the maximum value. A specific example includes but is not limited to point values in this embodiment such as 8 µm, 10 µm, 12 µm, 15 µm, 17 µm, or 18 µm, and a range value between any two of the above point values.

In the above 5 µm to 16 µm, a value includes a minimum value and a maximum value of the range and each value between the minimum value and the maximum value. A specific example includes but is not limited to point values in this embodiment such as 5 µm, 7 µm, 9 µm, 10 µm, 12 µm, 13 µm, 14 µm, 15 µm, or 16 µm, and a range value between any two of the above point values.

In an embodiment, the thickness of the porous coating is 1 µm to 5 µm.

The thickness of the porous coating is not limited in the present application, for example, the thickness of the porous coating is 1 µm to 5 µm. This may be set by those skilled in the art as required.

In the above 1 µm to 5 µm, a value includes a minimum value and a maximum value of the range and each value between the minimum value and the maximum value. A specific example includes but is not limited to point values in this embodiment such as 1 µm, 2 µm, 3 µm, 4 µm, or 5 µm, and a range value between any two of the above point values.

In an embodiment, the thickness of the binder layer is 0.5 µm to 5 µm, optionally 1 µm to 3 µm, and/or the thickness of the heat-resistant layer is 0 µm to 3 µm, optionally 1 µm to 2 µm.

In the present application, the porous coating may include a binder layer, and the binder layer may improve a bonding force between the electrode and the separator. The thickness of the binder layer is not limited in the present application, for example, the thickness of the binder layer may be 0.5 µm to 5 µm, optionally 1 µm to 3 µm.

In the present application, the porous coating may include a heat-resistant layer, the heat-resistant layer may include an inorganic material, and the inorganic material may enhance heat resistance, oxidation resistance, puncture resistance, and wettability of the separator, which helps improve safety of the battery. The thickness of the heat-resistant layer is not limited in the present application, for example, 0 µm to 3 µm, optionally 1 µm to 2 µm.

In the above 0.5 µm to 5 µm, a value includes a minimum value and a maximum value of the range and each value between the minimum value and the maximum value. A specific example includes but is not limited to point values in this embodiment such as 0.5 µm, 0.7 µm, 1 µm, 2 µm, 3 µm, 4 µm, or 5 µm, and a range value between any two of the above point values.

In the above 0 µm to 3 µm, a value includes a minimum value and a maximum value of the range and each value between the minimum value and the maximum value. A specific example includes but is not limited to point values in this embodiment such as 0 µm, 1 µm, 1.5 µm, 2 µm, 2. 5 µm, or 3 µm, and a range value between any two of the above point values.

In an embodiment, the binder layer includes a layered coating, and the layered coating is disposed on the first separator, or the binder layer includes a dotted coating, and the dotted coating is disposed on the first separator at intervals.

The layered coating means that the binder is continuously coated on a surface of the first porous base film, and presents a structure shown in FIG. 4. FIG. 4 is an embodiment of the first separator 100, where the binder layer 11 is disposed on the surface of the first porous base film 10.

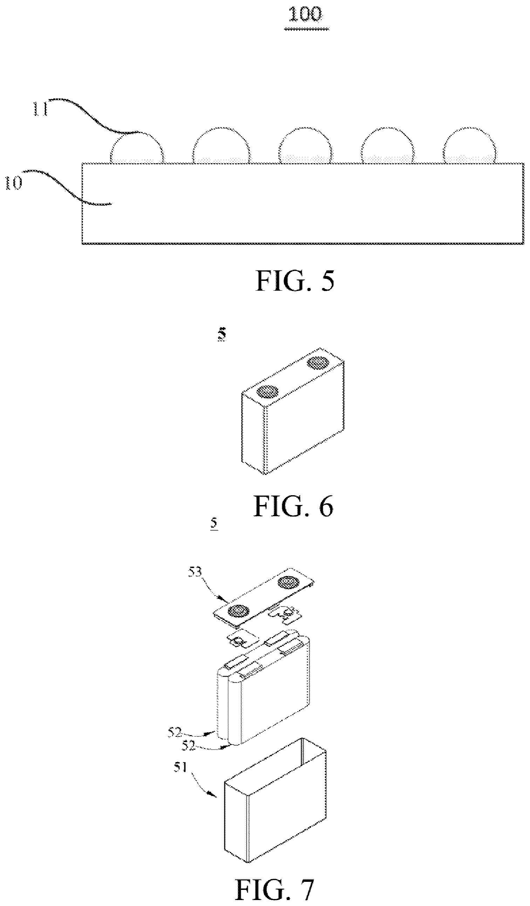

The dotted coating means that the binder is discontinuously disposed on the surface of the first porous base film, and presents a structure shown in FIG. 5. FIG. 5 is another embodiment of the first separator 100, where the dotted coating **11** is disposed on the surface of the first porous base film 10.

Further, the dotted coating is disposed on the first porous base film at intervals, so that good air permeability of the first separator can be ensured, thereby helping transmit ions. Further, the dotted coating has a larger contact area with the electrolyte solution and is easily swollen by the electrolyte solution. The volume of the dotted coating increases after swelling, which can increase the contact area of the dotted coating with the electrode, and improve bonding between the electrode and the separator. The electrolyte solution can be stored in the pores of the dotted coating after swelling, thereby improving wettability of the first separator to the electrolyte solution, and improving transmission of ions.

In an embodiment, the coverage area of the dotted coating is 50% to 90%, optionally 60% to 80%, of the surface area of the first separator.

For example, the area of one side of the first separator is S, and the sum of the coating areas of the dotted coatings on one side of the first separator is s1. In this case, the ratio of the coverage area of the dotted coating to the surface area of the first separator is s1/S, and a range of s1/S is 50% to 90%, optionally 60% to 80%.

When the ratio of the coverage area of the dotted coating to the surface area of the first separator falls within the above range, bonding of the binder layer can be improved.

In the above 50% to 90%, a value includes a minimum value and a maximum value of the range and each value between the minimum value and the maximum value. A specific example includes but is not limited to point values in this embodiment such as 50%, 55%, 60%, 65%, 70%, 75%, 80%, 85%, or 90%, and a range value between any two of the above point values.

In an embodiment, the binder layer includes a binder, and the mass percentage of the binder to the total mass of the binder layer is 80% to 95%, optionally 85% to 90%; and/or the heat-resistant layer includes an inorganic material, and the mass percentage of the inorganic material to the total mass of the heat-resistant layer is 60% to 80%, optionally 67% to 75%.

In the present application, the mass percentage of the binder to the total mass of the binder layer is 80% to 95%, optionally 85% to 90%. The heat-resistant layer includes an inorganic material, and the mass percentage of the inorganic material to the total mass of the heat-resistant layer is 60% to 80%, optionally 67% to 75%. When the mass percentage of the mass of the binder to the total mass of the binder layer falls within the above range, bonding of the binder layer can be improved. When the mass percentage of the inorganic material to the total mass of the heat-resistant layer falls within the above range, heat resistance of the heat-resistant layer can be improved, and heat resistance and mechanical performance of the first separator can be further improved.

In the above 80% to 95%, a value includes a minimum value and a maximum value of the range and each value between the minimum value and the maximum value. A specific example includes but is not limited to point values in this embodiment such as 80%, 83%, 85%, 87%, 90%, 93%, or 95%, and a range value between any two of the above point values.

In the above 60% to 80%, a value includes a minimum value and a maximum value of the range and each value between the minimum value and the maximum value. A specific example includes but is not limited to point values in this embodiment such as 60%, 65%, 70%, 75%, or 80%, and a range value between any two of the above point values.

In an embodiment, the air permeability of the first separator is 80s/100 cc to 250s/100 cc, optionally 110s/100 cc to 210s/100 cc, and/or the air permeability of the second separator is 110s/100 cc to 310s/100 cc, optionally 210s/100 cc to 310s/100 cc.

It may be understood that the air permeability index of the battery separator is an important index that affects internal resistance performance of the battery, and reflects the permeability of the separator. According to the requirements in GB/T36363-2018, the test requirement of the air permeability value is the time required for 100 ml of air to pass through a 6.45 square centimeters of the separator under the pressure of 1.21 kPa applied by the test instrument in the environment of temperature, humidity, and normal pressure. Better air permeability indicates better smoothness of transmission of ions through the separator and lower separator resistance.

In the present application, the air permeabilities of the first separator and the second separator are not limited, for example, the air permeability of the first separator is 80s/100 cc to 250s/100 cc, optionally 110s/100 cc to 210s/100 cc, and the air permeability of the second separator is 110s/100 cc to 310s/100 cc, optionally 210s/100 cc to 310s/100 cc.

When the air permeability of the first separator falls within the above range, transmission of ions through the first separator can be improved, and when the air permeability of the second separator falls within the above range, transmission of ions through the second separator can be improved.

In the above 80s/100 cc to 250s/100 cc, a value includes a minimum value and a maximum value of the range and each value between the minimum value and the maximum value. A specific example includes but is not limited to point values in this embodiment such as 80s/100 cc, 90s/100 cc, 100s/100 cc, 120s/100 cc, 140s/100 cc, 160s/100 cc, 180s/100 cc, 200s/100 cc, 220s/100 cc, 240s/100 cc, or 250s/100 cc, and a range value between any two of the above point values.

In the above 110s/100 cc to 310s/100 cc, a value include a minimum value and a maximum value of the range and each value between the minimum value and the maximum value. A specific example includes but is not limited to point values in this embodiment such as 110s/100 cc, 120s/100 cc, 140s/100 cc, 160s/100 cc, 180s/100 cc, 200s/100 cc, 220s/100 cc, 240s/100 cc, 250s/100 cc, 270s/100 cc, 290s/100 cc, 300s/100 cc, or 310s/100 cc, and a range value between any two of the above point values.

In an embodiment, the binder includes at least one of a vinylidene fluoride-hexafluoropropylene copolymer, a vinylidene fluoride-trichloroethylene copolymer, a polyacrylate, a polyacrylic acid, a polyacrylate salt, a polyacrylonitrile, a polyvinylpyrrolidone, a polyvinyl acetate, an ethylene-vinyl acetate copolymer, a polyimide, a polyethylene oxide, a cellulose acetate, a cellulose acetate butyrate, a cellulose acetate propionate, a cyanoethyl amylopectin, a cyanoethyl polyvinyl alcohol, a cyanoethyl cellulose, cyanoethyl sucrose, an amylopectin, a carboxymethyl cellulose, a sodium carboxymethyl cellulose, a lithium carboxymethyl cellulose, an acrylonitrile-styrene-butadiene copolymer, a polyvinyl alcohol, a styrene-butadiene copolymer, and a polyvinylidene fluoride; and/or the inorganic material includes at least one of silicon dioxide, aluminum oxide, titanium oxide, zinc oxide, magnesium oxide, hafnium oxide, tin oxide, zirconium oxide, yttrium oxide, silicon carbide, boehmite, magnesium hydroxide, aluminum hydroxide, calcium titanate, barium titanate, lithium phosphate, lithium titanium phosphate, and lithium lanthanum titanate.

In the present application, the binder includes but is not limited to at least one of a vinylidene fluoride-hexafluoropropylene copolymer, a vinylidene fluoride-trichloroethylene copolymer, a polyacrylate, a polyacrylic acid, a polyacrylate salt, a polyacrylonitrile, a polyvinylpyrrolidone, a polyvinyl acetate, an ethylene-vinyl acetate copolymer, a polyimide, a polyethylene oxide, a cellulose acetate, a cellulose acetate butyrate, a cellulose acetate propionate, a cyanoethyl amylopectin, a cyanoethyl polyvinyl alcohol, a cyanoethyl cellulose, cyanoethyl sucrose, an amylopectin, a carboxymethyl cellulose, a sodium carboxymethyl cellulose, a lithium carboxymethyl cellulose, an acrylonitrile-styrene-butadiene copolymer, a polyvinyl alcohol, a styrene-butadiene copolymer, and a polyvinylidene fluoride.

**In** the present application, the inorganic material includes but is not limited to at least one of silicon dioxide, aluminum oxide, titanium oxide, zinc oxide, magnesium oxide, hafnium oxide, tin oxide, zirconium oxide, yttrium oxide, silicon carbide, boehmite, magnesium hydroxide, aluminum hydroxide, calcium titanate, barium titanate, lithium phosphate, lithium titanium phosphate, and lithium lanthanum titanate.

It may be understood that the lithium titanium phosphate and the lithium lanthanum titanate are solid electrolytes, and the solid electrolyte material can react with metal lithium (taking a lithium-ion secondary battery as an example, the type of the battery is not limited in the present application) to absorb lithium dendrites, thereby preventing the lithium dendrites from penetrating the separator. That is, the solid electrolyte may be added to the heat-resistant layer, and the solid electrolyte includes but is not limited to at least one of lithium aluminum titanium phosphate, lithium titanium phosphate, lithium tetrathiophosphate, lithium germanium phosphorus sulfide, and lithium phosphorus sulfide chloride. Further, the solid electrolyte has specific ion conductivity and low electron conductivity. When used as an electrolyte material, the solid electrolyte has good ion conductivity and electron insulation. Therefore, when used as a separator coating, the solid electrolyte does not greatly increase the impedance of the separator, and inhibit transfer of electrons through the separator.

Further provided in the present application is a battery, including an electrode assembly. The battery includes a battery cell, a battery module, and a battery pack.

Further provided in the present application is an electric device, including a battery.

**In** addition, an electrode assembly, a battery cell, a battery, and an electric apparatus in the present application are described below with appropriate reference to the accompanying drawings.

**In** one implementation of the present application, an electrode assembly is provided.

Generally, the electrode assembly includes a positive electrode, a negative electrode, an electrolyte, and a separator. During charge and discharge of the battery, active ions are intercalated and deintercalated back and forth between the positive electrode and the negative electrode. The electrolyte functions to conduct ions between the positive electrode and the negative electrode. The separator is disposed between the positive electrode and the negative electrode, to mainly prevent positive and negative electrodes from being short-circuited and allow ions to pass through. The separator is the improved separator described in the present application.

The positive electrode includes a positive electrode current collector and a positive electrode film layer disposed on at least one surface of the positive electrode current collector.

As an example, the positive electrode current collector has two surfaces opposed in its own thickness direction, and the positive electrode film layer is provided on either one or both of the two opposed surfaces of the positive electrode current collector.

In some implementations, the positive electrode current collector may use a metal foil or a composite current collector. For example, an aluminum foil can be used as the metal foil. The composite current collector may include a polymer material base layer and a metal layer formed on at least one surface of the polymer material base layer. The composite current collector may be formed by forming a metal material (aluminum, an aluminum alloy, nickel, a nickel alloy, titanium, a titanium alloy, silver, a silver alloy, and the like) on a base material of a polymer material such as a base material of polypropylene (PP), polyethylene terephthalate (PET), polybutylene terephthalate (PBT), polystyrene (PS), polyethylene (PE), and the like.

In some implementations, when the electrode assembly is a lithium-ion battery, a positive electrode active material may be a positive electrode active material well-known in the art for lithium-ion batteries. As an example, the positive electrode active material may include at least one of olivine-structured lithium-containing phosphate, lithium-transition metal oxide, and their respective modifying compounds. However, the present application is not limited to these materials, and other conventional materials that can be used as a positive electrode active material of a battery may also be used. These positive electrode active materials may be used alone or in combination of two or more thereof. Examples of the lithium transition metal oxide may include but are not limited to at least one of lithium cobalt oxide (e.g., LiCoO2), lithium nickel oxide (for example, LiNiO2), lithium manganese oxide (e.g., LiMnO2 or LiMn2O4), lithium nickel cobalt oxide, lithium manganese cobalt oxide, lithium nickel manganese oxide, lithium nickel cobalt manganese oxide (e.g., LiNi1/3Co1/3Mn1/3O2 (also simply referred to as NCM333), LiNi0.5Co0.2Mn0.3O2 (also simply referred to as NCM523), LiNi0.5Co0.25Mn0.25O2 (also simply referred to as NCM211), LiNi0.6Co0.2Mn0.2O2 (also simply referred to as NCM622), LiNi0.8Co0.1Mn0.1O2 (also simply referred to as NCM811)), lithium nickel cobalt aluminum oxide (e.g., LiNi0.85Co0.15Al0.05O2), modified compounds thereof, and the like. Examples of the olivine-structured lithium-containing phosphate may include but are not limited to at least one of lithium iron phosphate (e.g., LiFePO4 (which may also be simply referred to as LFP)), a composite of lithium iron phosphate and carbon, lithium manganese phosphate (e.g., LiMnPO4), a composite material of lithium manganese phosphate and carbon, lithium ferro-manganese phosphate, and a composite material of lithium ferro-manganese phosphate and carbon.

Deintercalation and consumption of Li occur during charging and discharging of the battery, and the molar content of Li varies when the battery is discharged to different states. **In** the enumeration of the positive electrode material in the present application, the molar content of Li is an initial state of the material, i.e., a state before adding. The positive electrode material is applied to a battery system, and the molar content of Li changes after charging and discharging cycles.

In the enumeration of the positive electrode material in the present application, the molar content of O is only a theoretical state value, the molar content of oxygen changes due to the release of oxygen from a lattice, and the actual molar content of O fluctuates.

In some implementations, the positive electrode film layer optionally further includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some implementations, the positive electrode film layer further optionally includes a conductive agent. As an example, the conductive agent may include at least one of superconducting carbon, acetylene black, carbon black, ketjen black, carbon dots, carbon nanotubes, graphene, and carbon nanofibers.

In some implementations, the positive electrode may be prepared by dispersing the above components for preparing a positive electrode, for example, a positive electrode active material, a conductive agent, a binder, and any other components in a solvent (for example, N-methylpyrrolidone) to form a positive electrode slurry, and applying the positive electrode slurry to a positive electrode current collector, followed by drying, cold pressing, and the like.

The negative electrode includes a negative electrode current collector and a negative electrode film layer disposed on at least one surface of the negative electrode current collector, the negative electrode film layer including a negative electrode active material.

As an example, the negative electrode current collector has two surfaces opposite in its own thickness direction, and the negative electrode film layer is disposed on either one or both of the two opposite surfaces of the negative electrode current collector.

In some implementations, the negative electrode current collector may employ a metal foil or composite current collector. For example, a copper foil may be used as the metal foil. The composite current collector may include a polymer material base layer and a metal layer formed on at least one surface of a polymer material substrate. The composite current collector may be formed by forming a metal material (copper, a copper alloy, nickel, a nickel alloy, titanium, a titanium alloy, silver, a silver alloy, or the like) on the polymer material substrate (e.g., a substrate of polypropylene (PP), polyethylene terephthalate (PET), polybutylene terephthalate (PBT), polystyrene (PS), or polyethylene (PE)).

In some implementations, the negative electrode active material may be a negative electrode active material well-known in the art for batteries. As an example, the negative electrode active material may include at least one of the following materials: synthetic graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, the present application is not limited to these materials, and another conventional material that can be used as a negative electrode active material of a battery may also be used. These negative electrode active materials may be used alone or in combination of two or more thereof.

In some implementations, the negative electrode film layer optionally further includes a binder. The binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some implementations, the negative electrode film layer further optionally includes a conductive agent. The conductive agent may be selected from at least one of superconducting carbon, acetylene black, carbon black, Ketjen black, carbon dots, carbon nanotubes, graphene, and carbon nanofibers.

In some implementations, the negative electrode film layer further optionally includes another auxiliary agent, for example, a thickening agent (e.g., sodium carboxymethyl cellulose (CMC-Na)).

In some implementations, the negative electrode may be prepared in the following manner: dispersing the above-mentioned components for preparing the negative electrode, for example, the negative electrode active material, the conductive agent, the binder, and any other component in a solvent (e.g., deionized water) to form a negative electrode slurry; and coating the negative electrode slurry on the negative electrode current collector, and performing procedures such as drying and cold pressing, to obtain the negative electrode.

The electrolyte functions to conduct ions between the positive electrode and the negative electrode. The type of the electrolyte is not specifically limited in the present application, and may be selected according to a requirement.

In some implementations, the electrolyte uses an electrolyte solution. The electrolyte solution includes an electrolyte salt and a solvent.

In some implementations, the electrolyte salt may be selected from at least one of lithium hexafluorophosphate, lithium tetrafluoroborate, lithium perchlorate, lithium hexafluoroarsenate, lithium bisfluorosulfonylimide, lithium bistrifluoromethanesulfonylimide, lithium trifluoromethanesulfonate, lithium difluorophosphate, lithium difluorooxalatoborate, lithium dioxalatoborate, lithium difluorodioxalatophosphate, and lithium tetrafluorooxalatophosphate.

In some implementations, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone.

In some implementations, the electrolyte optionally further includes an additive. For example, the additive may include a negative electrode film-forming additive or a positive electrode film-forming additive, and may further include an additive capable of improving specific performance of a battery, for example, an additive for improving overcharge performance of a battery, or an additive for improving high-temperature or low-temperature performance of a battery.

In some implementations, the electrode assembly further includes a separator. The present application has no particular limitation to the type of the separator, and any known porous structure separator with good chemical stability and mechanical stability may be used.

In some implementations, a material of the separator may be selected from at least one of glass fiber, a non-woven fabric, polyethylene, polypropylene, and polyvinylidene fluoride. The separator may be either a single-layer film or a multi-layer composite film, which is not specially limited. In a case that the separator is the multi-layer composite film, the materials of the layers may be same or different, which is not specially limited.

In some implementations, the positive electrode, the negative electrode, and the separator may be manufactured into the electrode assembly through a winding process or a lamination process.

In some implementations, the electrode assembly may include an outer package. The outer package may be used to package the electrode assembly and the electrolyte.

In some implementations, the outer package of the electrode assembly may be a hard casing, for example, a hard plastic casing, an aluminum casing, or a steel casing. The outer package of the electrode assembly may alternatively be a pouch, such as a bag-type pouch. The material of the pouch may be plastic, and examples of the plastic include polypropylene, polybutylene terephthalate, and polybutylene succinate.

The shape of the electrode assembly is not particularly limited in the present application, and may be cylindrical, square, or any other shape. For example, FIG. 6 shows a battery cell 5 with a square structure as an example.

In some implementations, referring to FIG. 7, the outer package may include a housing 51 and a cover plate 53. The housing 51 may include a bottom plate and side plates connected to the bottom plate, and the bottom plate and the side plates may define an accommodating chamber. The housing 51 has an opening communicating with the accommodating chamber, and the cover plate 53 can cover on the opening to close the accommodating chamber. The positive electrode, the negative electrode, and the separator may be formed into the battery cell 52 through a winding process or a lamination process. The battery cell 52 is packaged in the accommodating chamber. The electrolyte solution is wetted in the battery cell 52. There may be one or a plurality of battery cells 52 included in the battery cell 5, and those skilled in the art may perform selection according to specific actual requirements.

In some implementations, the electrode assembly may be assembled into a battery module, there may be one or a plurality of electrode assemblies included in the battery module, and those skilled in the art may select a specific quantity based on the application and capacity of the battery module.

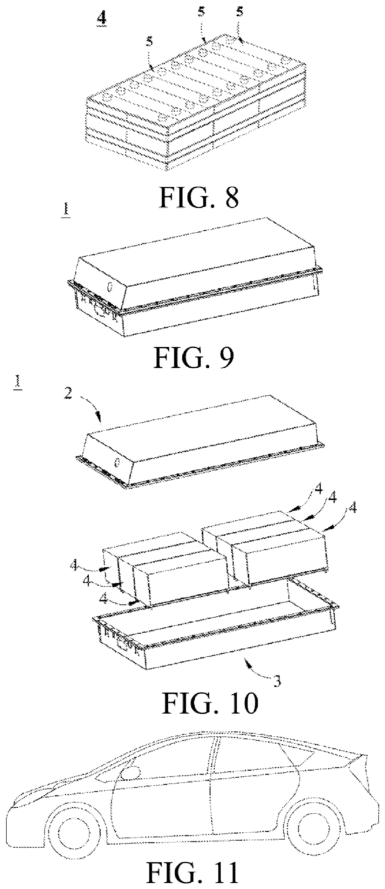

FIG. 8 shows a battery module 4 as an example. Referring to FIG. 8, in the battery module 4, a plurality of battery cells 5 may be arranged sequentially in the length direction of the battery module 4. Certainly, the secondary batteries may alternatively be arranged in any other manner. Further, the plurality of battery cells 5 may be fastened by using fasteners.

Optionally, the battery module 4 may further include a casing having an accommodating space in which the plurality of battery cells 5 are accommodated.

In some implementations, the battery modules may be further assembled into a battery pack, and there may be one or a plurality of battery modules included in the battery pack, and the specific number may be selected by those skilled in the art according to the application and capacity of the battery pack.

FIG. 9 and FIG. 10 show a battery pack 1 as an example. Referring to FIG. 9 and FIG. 10, a battery case and a plurality of battery modules 4 disposed in the battery case may be included in the battery pack 1. The battery case includes an upper case 2 and a lower case 3, the upper case 2 being capable of covering the lower case 3 and forming a closed space for accommodating the battery modules 4. The plurality of battery modules 4 may be arranged in any manner in the battery box.

In addition, the present application further provides an electric apparatus including at least one of the electrode assembly, the battery module, or the battery pack provided by the present application. The electrode assembly, the battery module, or the battery pack may be used as a power supply of the electric apparatus and may also be used as an energy storage unit of the electric apparatus. The electric apparatus may include, but is not limited to, a mobile device (e.g., a cell phone or a notebook computer), an electric vehicle (e.g., a battery electric vehicle, a hybrid electric vehicle, a plug-in hybrid electric vehicle, an electric bicycle, an electric scooter, an electric golf cart, or an electric truck), an electric train, ship, or satellite, or an energy storage system.

As an electric apparatus, an electrode assembly, a battery module, or a battery pack may be selected according to a usage requirement of the electric apparatus.

FIG. 11 shows an electric apparatus as an example. The electric apparatus is a pure electric vehicle, a hybrid electric vehicle, a plug-in hybrid electric vehicle, or the like. To meet a requirement for a high power and a high energy density of an electrode assembly by the electric apparatus, a battery pack or a battery module may be used.

In another example, the apparatus may be a cell phone, a tablet computer, a notebook computer, or the like. This apparatus is generally required to be thin and lightweight, and an electrode assembly can be used as a power supply.

### Embodiments

### Embodiment 1

### Manufacturing of a first separator:

A first porous base film having a thickness of 7 µm, made of polyethylene, having a porosity of 36%, and having an air permeability of 160s/100 cc is prepared.

Alumina, a binder of polyvinylidene fluoride, and a dispersant of acrylic block polymer are mixed at a mass ratio of 7:2:1, and dispersed in a solvent (deionized water) to form an inorganic coating slurry, which is uniformly coated on one side of a first base material, with a heat-resistant layer having a thickness of 2 µm.

Then, the binder components of polyethylene-vinylidene fluoride copolymer, N-dodecyl dimethylamine, and polydimethylsiloxane are mixed at a mass ratio of 8:1:1 to obtain a mixture, and then the mixture is dissolved in acetone to obtain a binder slurry with a solid content of 40%; the binder slurry is uniformly sprayed on both surfaces of the first base material to form a binder layer; and after the electrode assembly is compacted, the thickness of a single-layer polymer binder layer is 1 µm.

After the electrode assembly is compacted, the thickness of the first separator is 7 µm+2 µm+(2×1 µm)=11 µm, the porosity thereof is 30%, and the air permeability thereof is 130s/100 cc.

### Manufacturing of a second separator:

A second porous base film having a thickness of 10 µm, made of polypropylene, and having a porosity of 40% is prepared. The air permeability thereof is 250s/100 cc.

### Manufacturing of a negative electrode:

Graphite, a conductive agent of acetylene black, a binder of styrene-butadiene rubber (SBR), and a thickener of sodium carboxymethyl cellulose (CMC-Na) are added to a solvent of deionized water at a mass ratio of 96.2:1.0:1.6:1.2 to obtain a cathode slurry, and after the solvent is fully stirred and uniformly mixed, a negative electrode slurry is manufactured. The negative electrode slurry is coated on a copper foil as a negative electrode current collector. After procedures such as drying, cold pressing, and slitting, the negative electrode is obtained.

### Manufacturing of a positive electrode:

A positive electrode active material (NCM811), a binder (polyvinylidene fluoride (PVDF)), and a conductive agent (carbon black) are added to a solvent of N-methylpyrrolidone (NMP) at a mass ratio of 98:1:1 to obtain a slurry. Then, the slurry is coated on an aluminum foil as a current collector. After procedures such as drying and cold pressing, the positive electrode is obtained.

### Electrolyte solution:

At 25°C, ethylene carbonate (EC), ethyl methyl carbonate (EMC), and diethyl carbonate (DEC) are mixed at a volume ratio of 1:1:1 to obtain a mixed solvent, but this ratio and solvent impose no limitation. Then, LiPF₆ is dissolved in the above mixed solvent to obtain an electrolyte solution, with the concentration of LiPF₆ being 1 mol/L.

### Manufacturing of an electrode assembly:

The negative electrode, the first separator, the positive electrode, and the second separator that are manufactured in the embodiments are sequentially stacked layered by layer for winding. The first separator is located between the negative electrode and the positive electrode. The second separator is located on a side that is of the positive electrode and that faces away from the first separator. Winding is performed around a winding center in a winding process. **In** the winding process, a distance between the stacked negative electrode and the winding center is less than a distance between the stacked positive electrode and the winding center. Therefore, the positive electrode wraps the negative electrode in the stacked structure in the winding process, so that a cross section of the electrode assembly of the lithium-ion battery includes the first electrode (the negative electrode), the first separator, the second electrode (the positive electrode), and the second separator that are sequentially stacked, a plurality of first tabs disposed on the first electrode (the negative electrode), and a plurality of second tabs disposed on the second electrode (the positive electrode). When winding of each porous coating of the electrode assembly is completed, the second separator is located on the outermost side. It should also be understood that, because the outermost circle of the electrode assembly needs to be protected by the negative electrode, the length of the negative electrode is extended, so that the negative electrode wraps the outer circle by one more turn. The first separator is disposed on a surface of the negative electrode that wraps by one more turn.

### Manufacturing of a lithium-ion battery:

The electrode assembly obtained through winding is placed in an aluminum housing after processes such as ultrasonic welding and top cover welding, and a liquid injection port is left. An electrolyte solution is poured through the liquid injection port, followed by packaging, and then steps of formation, aging, capacity test, and the like to obtain the lithium-ion battery.

### Embodiment 2 to Embodiment 8

On the basis of Embodiment 1, Embodiment 2 to Embodiment 8 are obtained by adjusting the ratio of the thickness of the first separator to the thickness of the second separator, the material of the binder, the inorganic material, and the like.

In Embodiment 9, on the basis of Embodiment 1, there is one binder layer, and the binder layer and the heat-resistant layer are located on both sides of the first porous base film. After the electrode assembly is compacted, the thickness of the first porous base film is 7 µm, the thickness of the binder layer is 0.5 µm, and the thickness of the inorganic coating is 1 µm. In this case, the thickness of the first separator is 7 µm+1 µm+(1×0.5 µm)=8.5 µm.

In Embodiment 10, on the basis of Embodiment 1, there are two binder layers and two heat-resistant layers, the two binder layers are respectively located on both sides of the first porous base film, and the two heat-resistant layers are respectively located between the binder layers on both sides and the first porous base film. After the electrode assembly is compacted, the thickness of the first porous base film is 5 µm, the thickness of the binder layer is 2.5 µm, and the thickness of the inorganic coating is 2 µm. In this case, the thickness of the first separator is 5 µm+(2×2 µm)+(2×2.5 µm)=14 µm. The thickness of the second separator is 5 µm.

### Comparative Example 1

On the basis of Embodiment 8, the first separator is the same as the first separator in Embodiment 8, and the second separator is the same as the first separator in Embodiment 8, that is, the first separator and the second separator in Comparative Example 1 are the same.

### Cycling performance test:

At 25°C, the above lithium-ion battery is charged at a constant current of 1/3 C to 4.25 V, and then charged at a constant voltage of 4.25 V until the current reaches 0.05 C. After a 5-minute rest, the battery is discharged at a rate of 1/3 C to 2.5 V. This is one charge-discharge cycle. In this cycle, the discharge capacity is the discharge capacity at the first cycle. The above steps are repeated to perform the charge-discharge cycle test on the lithium-ion battery, and the discharge capacity at the 500^{th} cycle is recorded.

Capacity retention rate of the lithium-ion battery after 500 cycles = (discharge capacity at the 500^{th} cycle / discharge capacity at the first cycle) × 100%.

In the embodiments and comparative examples of the present application, a larger capacity retention rate indicates better cycling performance of the battery cell.

**Table 1 List of embodiments**

| / | First separator | | | | | | | | | Second separator | | Total thickness ratio of the first separator to the second separator | Cycling performan ce (500 cycles capacity retention rate) |
|---|---|---|---|---|---|---|---|---|---|---|---|---|---|
| | Binder layer | | | | Heat-resistant layer | | | Air permeabilit y s/100 cc | Total thicknes s µm | Total thicknes s µm | Air permeabilit y s/100 cc | | |
| | Binder material | Mass percentag e of the binder to the binder layer % | Distributio n form of the binder | Thicknes s µm (quantity of layers × thickness ) | Inorgani c material | Mass percentag e of the inorganic material to the heat-resistant layer µ | Thicknes s µm (quantity of layers × thickness ) | | | | | | |
| Embodimen t 1 | Polyethylene-vinylidene fluoride copolymer, N-dodecyldimethylamin e, and polydimethylsiloxane | 85% | Layered | 2×1 | Alumina | 70% | 1×2 | 130 | 11 | 10 | 250 | 11:10 | 94% |
| Embodimen t 2 | Polyethylene-vinylidene fluoride copolymer, N-dodecyldimethylamin e, and polydimethylsiloxane | 80% | Layered | 2×1 | Alumina | 60% | 1×2 | 150 | 11 | 10 | 250 | 11:10 | 93% |
| Embodimen t 3 | Polyethylene-vinylidene fluoride copolymer, N-dodecyldimethylamin e, and polydimethylsiloxane | 95% | Layered | 2×1 | Alumina | 80% | 1×2 | 140 | 11 | 10 | 250 | 11:10 | 92% |
| Embodimen t 4 | Polyethylene-vinylidene fluoride copolymer, N-dodecyldimethylamin e, and polydimethylsiloxane | 85% | Layered | 2×0.5 | Alumina | 70% | 1×2 | 150 | 10 | 10 | 250 | 10:10 | 93.5% |
| Embodimen t 5 | Polyethylene-vinylidene fluoride copolymer, N-dodecyldimethylamin e, and polydimethylsiloxane | 85% | Layered | 2×1 | Alumina | 70% | 1×4 | 120 | 13 | 10 | 250 | 13:10 | 93% |
| Embodimen t 6 | Polyethylene-vinylidene fluoride copolymer, N-dodecyldimethylamin e, and polydimethylsiloxane | 85% | Dotted | 2×1 | Alumina | 70% | 1×2 | 130 | 11 | 10 | 250 | 11:10 | 95% |
| Embodimen t 7 | Polytetrafluoroethylen e | 85% | Layered | 2×1 | Alumina | 70% | 1×2 | 130 | 11 | 10 | 250 | 11:10 | 92% |
| Embodimen t 8 | Polyethylene-vinylidene fluoride copolymer, N-dodecyldimethylamin e, and polydimethylsiloxane | 85% | Layered | 2×1 | Aramid | 70% | 1×2 | 120 | 11 | 10 | 250 | 11:10 | 90% |
| Embodimen t 9 | Polyethylene-vinylidene fluoride copolymer, N-dodecyldimethylamin e, and polydimethylsiloxane | 85% | Layered | 1×0.5 | Alumina | 70% | 1×1 | 160 | 8.5 | 16.5 | 250 | 8.5:16.5 | 93% |
| Embodimen t 10 | Polyethylene-vinylidene fluoride copolymer, N-dodecyldimethylamin e, and polydimethylsiloxane | 85% | Layered | 2×2.5 | Alumina | 70% | 2×2 | 100 | 14 | 5 | 250 | 14:5 | 92% |
| Comparativ e Example 1 | The first separator and the second separator are the same (both are the same as the first separator in Embodiment 8) | | | | | | | | | | | | 88% |

**It** can be learned from the experimental data in Table 1 that, in the embodiments, designs of the first separator and the second separator are different. Therefore, in a battery cycling process, more expansion space is reserved for a cell, which reduces compression by a housing on the cell in an expansion process, thereby alleviating a phenomenon that an active material is damaged due to a compression force in a compression process, and also alleviating a phenomenon that an electrolyte solution is extruded in the compression process. Therefore, the cell is effectively wetted in the electrolyte solution in the expansion process, which helps transmit ions, and further effectively improves cycling performance of the battery.

The foregoing are only preferred embodiments of the present application, and are not intended to limit the patent scope of this application, and any equivalent structural modifications made by using the content of the specification and the accompanying drawings of this application under the concept of this application, directly/indirectly applied in other related technical fields, are included in the patent protection scope of this application.

## Claims

1. An electrode assembly, comprising a first electrode, a second electrode, a first separator, and a second separator, wherein
one of the first separator and the second separator is disposed between the first electrode and the second electrode, the other of the first separator and the second separator is disposed on a side that is of the first electrode or the second electrode and that faces away from the first separator, one of the first separator and the second separator does not comprise a porous coating, the other of the first separator and the second separator comprises a porous coating, and the thickness of the porous coating is 0.5 µm to 8 µm.

2. The electrode assembly according to claim 1, wherein the first separator comprises a first porous base film and a porous coating; and/or the second separator comprises a second porous base film.

3. The electrode assembly according to claim 1 or 2, wherein the second separator does not comprise a porous coating, and the second separator is disposed on a side that is of the first electrode or the second electrode and that faces away from the first separator.

4. The electrode assembly according to any one of claims 1 to 3, wherein the electrode assembly comprises a wound structure, the wound structure comprises an inner side and an outer side, and the wound structure comprises, from the inner side to the outer side, a negative electrode, a first separator, a positive electrode, and a second separator that are sequentially stacked layer by layer.

5. The electrode assembly according to any one of claims 2 to 4, wherein the thickness of the second porous base film is greater than the thickness of the first porous base film.

6. The electrode assembly according to any one of claims 2 to 5, wherein the porosity of the first porous base film is greater than the porosity of the second porous base film.

7. The electrode assembly according to any one of claims 1 to 6, wherein the air permeability of the first separator is greater than the air permeability of the second separator.

8. The electrode assembly according to any one of claims 1 to 7, wherein the ratio of the thickness of the first separator to the thickness of the second separator is 1:2 to 18:5.

9. The electrode assembly according to any one of claims 1 to 8, wherein the ratio of the thickness of the first separator to the thickness of the second separator is 1:2 to 3:1.

10. The electrode assembly according to any one of claims 1 to 9, wherein the thickness of the first separator is 8 µm to 18 µm;
and/or the thickness of the second separator is 5 µm to 16 µm.

11. The electrode assembly according to any one of claims 1 to 10, wherein the thickness of the first separator is 10 µm to 15 µm;
and/or the thickness of the second separator is 5 µm to 10 µm.

12. The electrode assembly according to any one of claims 1 to 11, wherein the thickness of the porous coating is 1 µm to 5 µm.

13. The electrode assembly according to any one of claims 1 to 12, wherein the air permeability of the first separator is 80s/100 cc to 250s/100 cc;
and/or the air permeability of the second separator is 110s/100 cc to 310s/100 cc.

14. The electrode assembly according to any one of claims 1 to 13, wherein the air permeability of the first separator is 110s/100 cc to 210s/100 cc;
and/or the air permeability of the second separator is 210s/100 cc to 310s/100 cc.

15. The electrode assembly according to any one of claims 2 to 14, wherein the porous coating is disposed on at least one side of the first porous base film;
and/or the porous coating comprises at least one of a binder and an inorganic material.

16. The electrode assembly according to any one of claims 1 to 15, wherein the porous coating comprises at least one of a binder layer and a heat-resistant layer.

17. The electrode assembly according to any one of claims 2 to 16, wherein at least one side of the first porous base film is provided with a binder layer.

18. The electrode assembly according to claim 17, wherein a heat-resistant layer is disposed between the first porous base film and the binder layer.

19. The electrode assembly according to claim 18, wherein the thickness of the binder layer is 0.5 µm to 5 µm;
and/or the thickness of the heat-resistant layer is 0 µm to 3 µm.

20. The electrode assembly according to claim 18 or 19, wherein the thickness of the binder layer is 1 µm to 3 µm;
and/or the thickness of the heat-resistant layer is 1 µm to 2 µm.

21. The electrode assembly according to any one of claims 17 to 20, wherein the binder layer comprises a layered coating, and the layered coating is disposed on the first separator;
or the binder layer comprises a dotted coating, and the dotted coating is disposed on the first separator at intervals.

22. The electrode assembly according to any one of claims 17 to 20, wherein the binder layer comprises a dotted coating, and a coverage area of the dotted coating is 50% to 90% of a surface area of the first separator.

23. The electrode assembly according to claim 22, wherein the coverage area of the dotted coating is 60% to 80% of the surface area of the first separator.

24. A battery, comprising the electrode assembly according to any one of claims 1 to 23.

25. An electric device, wherein the electric device comprises the battery according to claim 24.
